# EUROPEAN PATENT APPLICATION

(11) **EP 4 831 217 A1**
(43) Date of publication of application: **28.10.2026**
(21) Application number: 24907001.2
(22) Date of filing: 13.11.2024
(51) Int. Cl.: C08G 59/20, B29C 70/06, B29C 70/28, C08F 299/02, C08G 59/72, C08J 5/24, B29K 63/00, B29K 105/08

(54) **THERMOSETTING RESIN COMPOSITION, CURED PRODUCT THEREOF, FIBER-REINFORCED COMPOSITE MATERIAL, AND PRODUCTION METHOD FOR MOLDED BODY**

(30) Priority: 18.12.2023 JP 2023213331
(71) Applicant: MITSUBISHI GAS CHEMICAL COMPANY, INC., Chiyoda-ku Tokyo 100-8324 (JP)
(72) Inventor: WAKAHARA, Daiki, Hiratsuka-shi, Kanagawa 254-0016 (JP); IKEUCHI, Kousuke, Hiratsuka-shi, Kanagawa 254-0016 (JP)
(74) Representative: Vossius & Partner Patentanwälte Rechtsanwälte mbB
(86) International application number: PCT/JP2024/040240
(87) International publication number: WO 2025/134613

(57) **Abstract**

A thermosetting resin composition containing component (A): an epoxy resin having no polybutadiene structure, component (B): a (meth)acrylate compound, component (C): a reactive diluent, component (D): an epoxy resin curing agent, and component (E): a thermal radical polymerization initiator; a cured product thereof; a fiber-reinforced composite material containing the cured product and a reinforcing fiber; and a manufacturing method of a molded body containing the fiber-reinforced composite material.

## Description

### Technical Field

The present invention relates to a thermosetting resin composition, a cured product thereof, a fiber-reinforced composite material, and a manufacturing method of a molded body containing the fiber-reinforced composite material.

### Background Art

Fiber-reinforced composite materials (hereinafter, also referred to as "FRP (fiber reinforced plastics)") have a very high elastic modulus and strength and are therefore noted as metal-substitute materials. Accelerated demand for FRP for use in automobile structural materials, wind power blades, pressure containers, and aerospace systems is expected, and demand for reinforcing fibers and matrix resins such as epoxy resins for use in FRP has also been increasing in recent years.

A method of impregnating a reinforcing fiber with a thermosetting resin composition in advance to prepare a prepreg, followed by molding and curing of the prepreg is known as a method of manufacturing a fiber-reinforced composite material having a cured product of the thermosetting resin composition as a matrix resin.

Prepregs and curable resin compositions suitable for prepregs are also being investigated. For example, Patent Document 1 discloses, as a prepreg useful for molding a fiber-reinforced plastic having high strength and high toughness, a prepreg containing carbon fibers and a matrix resin, in which the matrix resin is a curable resin composition containing a bisphenol-type epoxy resin, (meth)acrylate compounds having two or more functional groups, and a curing agent containing dicyandiamide and a radical polymerization agent, and a cured product of the curable resin composition has a predetermined bending elastic modulus and breaking elongation. There is also described a method of producing a tubular body by winding the prepreg around a mandrel.

Patent Document 2 discloses, as a curable resin composition for a prepreg useful for molding a fiber-reinforced plastic having high strength and high toughness, a curable resin composition containing two types of epoxy resins satisfying predetermined requirements, (meth)acrylate compounds having two or more functional groups, and a curing agent.

### Citation List

### Patent Document

Patent Document 1: JP 6993549 B
Patent Document 2: JP 2022-27815 A

### Summary of Invention

### Technical Problem

The thermosetting resin composition for a prepreg as disclosed in Patent Documents 1 and 2 is often relatively highly viscous from a point of view of easy storage of the prepreg, and the like. On the other hand, the thermosetting resin composition to be used may be required to have low viscosity depending on a manufacturing method of a fiber-reinforced composite material or a molded body containing this.

For example, the production of a fiber-reinforced composite material by a pultrusion process or a filament winding molding process is performed through the step of immersing reinforcing fibers into a resin bath filled with the thermosetting resin composition, thereby impregnating the reinforcing fibers with the composition, and molding the resulting fibers in a mold in which the fibers are introduced, or by winding, followed by curing by heating. Unlike the case of using a prepreg, the production method described above is required to improve an impregnation rate of reinforcing fibers with the thermosetting resin composition, because the steps from the impregnation of reinforcing fibers with the thermosetting resin composition to the curing by heating are performed continuously or intermittently. From this point of view, the thermosetting resin composition to be used is desired to have low viscosity.

The production of a fiber-reinforced composite material by a Va-RTM (vacuum assisted resin transfer molding) process includes the step of placing reinforcing fibers in a mold, filling the thermosetting resin composition into the mold, and impregnating the reinforcing fibers with the thermosetting resin composition. In this respect, the thermosetting resin composition is desired to have low viscosity from a point of view of improving productivity of the fiber-reinforced composite material by improving a filling rate of the thermosetting resin composition into a mold and an impregnation rate of reinforcing fibers.

A further problem of the pultrusion process and the filament winding molding process is curing in a resin bath if the thermosetting resin composition has rapid curability. On the other hand, the Va-RTM process takes several tens of minutes to fill the thermosetting resin composition into a mold depending on the shape or size of the fiber-reinforced composite material to be produced. The thermosetting resin composition is therefore required to have a long pot life.

Besides, the thermosetting resin composition used for production of a fiber-reinforced composite material is required to have a high glass transition temperature and a high elongation percentage of its cured product in order to ensure the heat resistance and high toughness of the fiber-reinforced composite material to be produced.

However, all of the required characteristics above are difficult to be satisfied by the techniques disclosed in Patent Documents 1 and 2.

An object of the present invention is to provide: a thermosetting resin composition which has low viscosity and a long pot life and can provide a cured product having a high glass transition temperature and a high elongation percentage; a cured product thereof; a fiber-reinforced composite material containing the cured product and a reinforcing fiber; and a manufacturing method of a molded body containing the fiber-reinforced composite material.

### Solution to Problem

The present inventors have found that the problems set forth above can be solved by a thermosetting resin composition containing a predetermined epoxy resin, a (meth)acrylate compound, a reactive diluent, an epoxy resin curing agent, and a thermal radical polymerization initiator.

That is, the present invention relates to the following.
[1] A thermosetting resin composition containing:
   component (A): an epoxy resin having no polybutadiene structure;
   component (B): a (meth)acrylate compound;
   component (C): a reactive diluent;
   component (D): an epoxy resin curing agent; and
   component (E): a thermal radical polymerization initiator.
[2] The thermosetting resin composition according to [1], wherein viscosity at 20°C of the component (C) is 200 mPa·s or less.
[3] The thermosetting resin composition according to [1] or [2], wherein a content of the component (C) in the thermosetting resin composition is from 1 to 50 mass%.
[4] The thermosetting resin composition according to any one of [1] to [3], wherein the component (B) contains component (B1): a poly(butadiene-CO-acrylonitrile) having a (meth)acryloyloxy group each at both termini.
[5] The thermosetting resin composition according to any one of [1] to [4], wherein the component (B) contains component (B2): a polyfunctional (meth)acrylate having an aromatic ring.
[6] The thermosetting resin composition according to any one of [1] to [5], wherein the component (C) contains a compound having two or more glycidyl groups.
[7] The thermosetting resin composition according to any one of [1] to [6], wherein the component (D) contains a boron amine complex.
[8] The thermosetting resin composition according to [7], wherein the amine component in the boron amine complex is a trialkylamine.
[9] The thermosetting resin composition according to any one of [1] to [8], wherein viscosity at 25°C of the thermosetting resin composition is 1000 mPa·s or less.
[10] A cured product of the thermosetting resin composition according to any one of [1] to [9].
[11] A fiber-reinforced composite material containing the cured product according to [10], and a reinforcing fiber.
[12] The fiber-reinforced composite material according to [11], wherein the reinforcing fiber is at least one selected from the group consisting of carbon fibers, glass fibers, and basalt fibers.
[13] A method of manufacturing a molded body containing the fiber-reinforced composite material according to [11] or [12], the method including
   any one of a pultrusion process, a Va-RTM process, and a filament winding molding process.

### Advantageous Effects of Invention

The present invention can provide: a thermosetting resin composition which has low viscosity and a long pot life and can provide a cured product having a high glass transition temperature and a high elongation percentage; a cured product thereof; a fiber-reinforced composite material containing the cured product and a reinforcing fiber; and a manufacturing method of a molded body containing the fiber-reinforced composite material.

### Description of Embodiments

### [Definitions]

As used herein, "(meth)acrylate" includes both acrylate and methacrylate. The same holds true for "(meth)acryloyloxy group", "(meth)acrylic acid", and the like.

As used herein, "room temperature" means 23°C unless otherwise specified.

### [Thermosetting resin composition]

The thermosetting resin composition of the present invention (hereinafter, also simply referred to as "composition of the present invention") contains
component (A): an epoxy resin having no polybutadiene structure,
component (B): a (meth)acrylate compound,
component (C): a reactive diluent,
component (D): an epoxy resin curing agent, and
component (E): a thermal radical polymerization initiator.

The composition of the present invention has the composition set forth above and thus has low viscosity and a long pot life and furthermore the composition provides a cured product having a high glass transition temperature and a high elongation percentage.

The reason why the effect set forth above can be achieved in the present invention is not clear, but it can be considered as follows.

The thermosetting resin composition of the present invention contains an epoxy resin (A) having no polybutadiene structure (hereinafter, also simply referred to as "epoxy resin (A)"), and a (meth)acrylate compound (B) as thermosetting resins. The epoxy resin curing agent (D) is a curing agent for the component (A), and the thermal radical polymerization initiator (E) acts as a polymerization initiator for curing the component (B) by thermal polymerization.

A thermosetting (epoxy) resin composition including an epoxy resin and an epoxy resin curing agent is generally excellent in curability, heat resistance, and the like, but there has been a problem of low elongation percentage of a cured product thereof for the intended use which is required to have high toughness. In addition, the epoxy resin composition usually cures rapidly, and hence an improvement in pot life is also needed for thermosetting resin compositions for use in fiber-reinforced composite materials to be produced by a pultrusion process, a Va-RTM process, or the like.

It is believed that the thermosetting resin composition of the present invention is a hybrid of an epoxy resin curing system of the component (A) - the component (D) and a (meth)acrylate curing system of the component (B) - the component (E), whereby the elongation percentage of a cured product is increased compared to the case of the epoxy resin curing system alone and furthermore the decrease of the pot life of the composition caused by high reactivity between the component (A) and the component (D) can be suppressed.

Furthermore, if the component (A) used in the present invention is a modified epoxy resin having a polybutadiene structure, the resulting thermosetting resin composition might have high viscosity and decrease a glass transition temperature of its cured product. In the present invention, it is believed that the component (A) is not the modified epoxy resin having a polybutadiene structure, while the thermosetting resin composition contains a reactive diluent (C), thereby providing a thermosetting resin composition having low viscosity.

### <Component (A): Epoxy resin having no polybutadiene structure>

The epoxy resin (A) used in the present invention is preferably a polyfunctional epoxy resin having no polybutadiene structure and having two or more epoxy groups from a point of view of improving curability, and Tg of the resulting cured product. Also, the epoxy resin (A) is preferably a compound containing no (meth)acryloyloxy group.

The epoxy resin (A) used in the present invention is a compound other than the reactive diluent (C) described later. From this point of view, the viscosity at 20°C of the epoxy resin (A) is preferably more than 200 mPa·s, more preferably 400 mPa·s or more, and further preferably 500 mPa·s or more. The viscosity at 20°C of the epoxy resin (A) can be specifically measured by the method described in Examples using an E-type viscometer, as in the viscosity of the component (C) described later. The "epoxy resin having viscosity of more than 200 mPa·s at 20°C" also includes an epoxy resin that is a solid at 20°C.

The epoxy resin (A) is more preferably a polyfunctional epoxy resin containing an aromatic ring or alicyclic structure in the molecule from a point of view of improving Tg of the cured product.

As specific examples of the epoxy resin (A), mention may be made of at least one selected from the group consisting of a polyfunctional epoxy resin having a glycidylamino group derived from metaxylylenediamine, a polyfunctional epoxy resin having a glycidylamino group derived from paraxylylenediamine, a polyfunctional epoxy resin having a glycidylamino group derived from 1,3-bis(aminomethyl)cyclohexane, a polyfunctional epoxy resin having a glycidylamino group derived from 1,4-bis(aminomethyl)cyclohexane, a polyfunctional epoxy resin having a glycidylamino group derived from diaminodiphenylmethane, a polyfunctional epoxy resin having a glycidyloxy group and/or a glycidylamino group derived from paraaminophenol, a polyfunctional epoxy resin having a glycidyloxy group derived from resorcinol, a polyfunctional epoxy resin having a glycidyloxy group derived from bisphenol A, or a hydrogenation product thereof, a polyfunctional epoxy resin having a glycidyloxy group derived from bisphenol F, or a hydrogenation product thereof, and a polyfunctional epoxy resin having a glycidyloxy group derived from phenol novolac. The polyfunctional epoxy resin may be used alone or two or more types thereof may be used in combination.

Among the above, from a point of view of improving Tg of the cured product, the epoxy resin (A) preferably contains, as a main component, at least one selected from the group consisting of a polyfunctional epoxy resin having a glycidylamino group derived from metaxylylenediamine, a polyfunctional epoxy resin having a glycidylamino group derived from paraxylylenediamine, a polyfunctional epoxy resin having a glycidyloxy group derived from bisphenol A, and a polyfunctional epoxy resin having a glycidyloxy group derived from bisphenol F; and the epoxy resin (A) more preferably contains, as a main component, at least one selected from the group consisting of an epoxy resin having a glycidyloxy group derived from bisphenol A and an epoxy resin having a glycidyloxy group derived from bisphenol F.

Note that, the term "main component" as used herein means that other components may be contained without departing from the spirit of the present invention, and means that the main component is contained in an amount preferably from 50 to 100 mass%, more preferably from 70 to 100 mass%, and further preferably from 90 to 100 mass% based on the whole.

The polyfunctional epoxy resin having a glycidyloxy group derived from bisphenol A is bisphenol A diglycidyl ether or an oligomer thereof and is preferably a polyfunctional epoxy resin represented by the following structural formula: 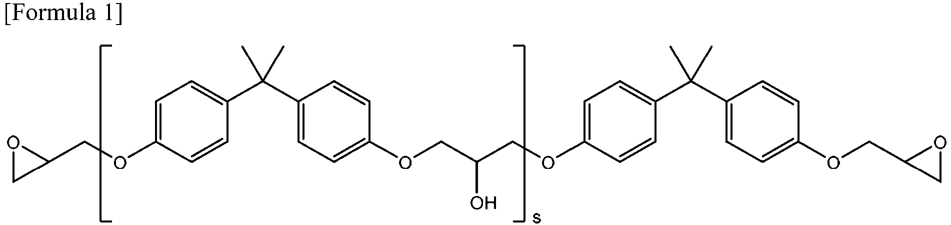 wherein s represents an average number of repeating units and is a number of from 0 to 20.

From a point of view of improving Tg of the cured product, s in the formula is preferably from 0 to 15, more preferably from 0 to 10, further preferably from 0 to 5.0, and even more preferably from 0 to 2.0.

The polyfunctional epoxy resin having a glycidyloxy group derived from bisphenol F is bisphenol F diglycidyl ether or an oligomer thereof and is preferably a polyfunctional epoxy resin represented by the following structural formula: 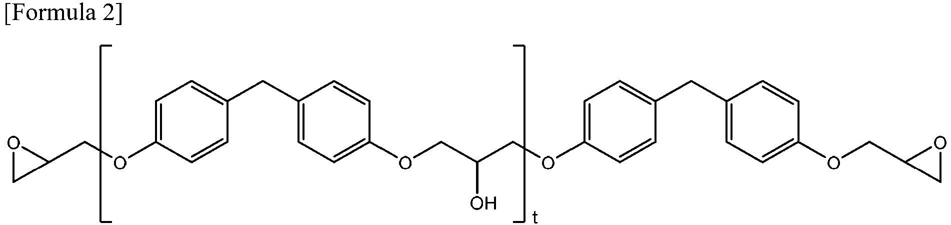 wherein t represents an average number of repeating units and is a number of from 0 to 20.

From a point of view of improving Tg of the cured product, t in the formula is preferably from 0 to 15, more preferably from 0 to 10, further preferably from 0 to 5.0, and even more preferably from 0 to 2.0.

The epoxy resin (A) may be either a solid epoxy resin or a liquid epoxy resin, but the epoxy resin (A) preferably contains a liquid epoxy resin from a point of view of obtaining a thermosetting resin composition having low viscosity. The "liquid epoxy resin" refers to an epoxy resin having fluidity at 25°C.

The content of the liquid epoxy resin in the epoxy resin (A) is preferably 50 mass% or more, more preferably 60 mass% or more, further preferably 70 mass% or more, even more preferably 80 mass% or more, even more preferably 85 mass% or more, even more preferably 90 mass% or more, and 100 mass% or less from a point of view of obtaining a thermosetting resin composition having low viscosity.

The epoxy equivalent (functional group equivalent) of the epoxy resin (A) is not particularly limited, but is preferably 1500 g/equivalent or less, more preferably 1200 g/equivalent or less, further preferably 1000 g/equivalent or less, even more preferably 800 g/equivalent or less, even more preferably 500 g/equivalent or less, even more preferably 350 g/equivalent or less, and even more preferably 250 g/equivalent or less from a point of view of obtaining a thermosetting resin composition having low viscosity, and is preferably 120 g/equivalent or more, more preferably 140 g/equivalent or more, and further preferably 150 g/equivalent or more from a point of view of improving curability and a pot life.

When a mixture of two or more epoxy resins is used as the epoxy resin (A), the epoxy equivalent of the epoxy resin (A) means the epoxy equivalent of the mixture.

As for the component (A), commercially available products such as "jER825", "jER827", "jER828", "jER834", and "jER1001", which are available from Mitsubishi Chemical Corporation, can be used as the polyfunctional epoxy resin having a glycidyloxy group derived from bisphenol A, and commercially available products such as "jER806", "jER806H", "jER807", "jER4005P", "jER4007P", and "jER4010P", which are available from Mitsubishi Chemical Corporation, can be used as the polyfunctional epoxy resin having a glycidyloxy group derived from bisphenol F.

### <Component (B): (Meth)acrylate compound>

The component (B) used in the present invention may be a compound having no glycidyl group and having at least one (meth)acryloyloxy group. From a point of view of improving Tg and the elongation percentage of the cured product, the component (B) preferably contains a polyfunctional (meth)acrylate compound having two or more (meth)acryloyloxy groups.

The number of (meth)acryloyloxy groups included in the polyfunctional (meth)acrylate compound is preferably from 2 to 6, more preferably from 2 to 4, further preferably from 2 to 3, and even more preferably 2. When the number of (meth)acryloyloxy groups included in the polyfunctional (meth)acrylate compound is 2 or more, it is easy to contribute to the improvement of Tg of the cured product, and when the number of (meth)acryloyloxy groups is 6 or less, the decrease of the elongation percentage of the cured product can be suppressed.

The content of the polyfunctional (meth)acrylate compound in the component (B) is preferably 50 mass% or more, more preferably 60 mass% or more, further preferably 70 mass% or more, even more preferably 80 mass% or more, even more preferably 90 mass% or more, even more preferably 95 mass% or more, even more preferably 98 mass% or more, and 100 mass% or less from a point of view of improving Tg and the elongation percentage of the cured product.

From a point of view of improving Tg and the elongation percentage of the cured product, the component (B) preferably contains, as the polyfunctional (meth)acrylate compound, at least one selected from the group consisting of component (B1): a poly(butadiene-CO-acrylonitrile) having a (meth)acryloyloxy group each at both termini and component (B2): a polyfunctional (meth)acrylate having an aromatic ring and more preferably contains both the component (B1) and the component (B2).

### (Component (B 1): Poly(butadiene-CO-acrylonitrile) having a (meth)acryloyloxy group each at both termini)

From a point of view of improving the elongation percentage of the cured product, the component (B) preferably contains, as the polyfunctional (meth)acrylate compound, component (B1): a poly(butadiene-CO-acrylonitrile) having a (meth)acryloyloxy group each at both termini. The component (B1) has a highly flexible structure and it is thus believed that the decrease of an elongation percentage can be suppressed even for a cured product having a high cross-link density.

The component (B1) used in the present invention is a di(meth)acrylate having a (meth)acryloyloxy group each at both termini of a main chain containing a copolymerized structure of butadiene and acrylonitrile.

The content of the constitutional unit derived from acrylonitrile in the component (B1) is preferably from 5 to 50 mass%, more preferably from 10 to 30 mass%, and further preferably from 10 to 25 mass% from a point of view of improving Tg and the elongation percentage of the cured product.

The weight average molecular weight (Mw) of the component (B1) is preferably from 1000 to 30000, more preferably from 2000 to 10000, and further preferably from 3000 to 8000. When the Mw is 1000 or more, it is easy to contribute to the improvement of the elongation percentage of the cured product, and when the Mw is 30000 or less, it is easy to suppress the decrease of Tg of the cured product.

A commercially available product such as "Hypro 1300X33 LC" available from CHORI GLEX Co., Ltd. may be used as the component (B1).

The content of the component (B1) in the component (B) is preferably from 1 to 70 mass%, more preferably from 5 to 60 mass%, further preferably from 10 to 60 mass%, even more preferably from 15 to 60 mass%, even more preferably from 15 to 50 mass%, even more preferably from 15 to 40 mass%, even more preferably from 15 to 30 mass%, even more preferably from 15 to 25 mass%, and even more preferably from 15 to 20 mass%. When the content of the component (B1) in the component (B) is 1 mass% or more, it is easy to contribute to the improvement of the elongation percentage of the cured product, and when the content is 70 mass% or less, the decrease of Tg of the cured product can be suppressed.

### (Component (B2): Polyfunctional (meth)acrylate having an aromatic ring)

From a point of view of improving Tg and the elongation percentage of the cured product, the component (B) preferably contains, as the polyfunctional (meth)acrylate compound, component (B2): a polyfunctional (meth)acrylate having an aromatic ring.

The number of (meth)acryloyloxy groups included in the component (B2) is preferably from 2 to 6, more preferably from 2 to 4, further preferably from 2 to 3, and even more preferably 2. When the number of (meth)acryloyloxy groups included in the component (B2) is 2 or more, it is easy to contribute to the improvement of Tg of the cured product, and when the number of (meth)acryloyloxy groups is 6 or less, the decrease of the elongation percentage of the cured product can be suppressed.

The aromatic ring included in the component (B2) may be a single ring or a fused ring, and examples thereof include a benzene ring, a naphthalene ring, an anthracene ring, and a tetracene ring, but are not limited thereto. Among them, at least one selected from the group consisting of a benzene ring and a naphthalene ring is preferable, and a benzene ring is more preferable.

The number of aromatic rings included in the component (B2) may be 1 or more, and is preferably 2 or more from a point of view of improving Tg and the elongation percentage of the cured product.

Specific examples of the polyfunctional (meth)acrylate having an aromatic ring, which is used as the component (B2), include polyfunctional (meth)acrylate having a structure derived from biphenol, polyfunctional (meth)acrylate having a structure derived from bisphenol A, polyfunctional (meth)acrylate having a structure derived from bisphenol F, polyfunctional (meth)acrylate having a fluorene structure, and polyfunctional (meth)acrylate having a structure derived from an aromatic hydrocarbon formaldehyde resin, and one type or two or more types of these can be used.

Among the above, from a point of view of improving Tg and the elongation percentage of the cured product, the component (B2) preferably contains at least one selected from the group consisting of polyfunctional (meth)acrylate having a structure derived from bisphenol A, polyfunctional (meth)acrylate having a structure derived from bisphenol F, and polyfunctional (meth)acrylate having a structure derived from an aromatic hydrocarbon formaldehyde resin, more preferably contains at least one selected from the group consisting of polyfunctional (meth)acrylate having a structure derived from bisphenol A and polyfunctional (meth)acrylate having a structure derived from an aromatic hydrocarbon formaldehyde resin, and further preferably contains polyfunctional (meth)acrylate having a structure derived from bisphenol A.

The polyfunctional (meth)acrylate may be any of polyester (meth)acrylate having a main skeleton derived from a polyol, epoxy (meth)acrylate having a main skeleton derived from an epoxy compound, urethane (meth)acrylate having a main skeleton derived from a polyisocyanate and polyol, but is preferably at least one selected from the group consisting of polyester (meth)acrylate and epoxy (meth)acrylate.

The aromatic hydrocarbon formaldehyde resin is a resin obtained by reacting an aromatic hydrocarbon with formaldehyde. As the aromatic hydrocarbon, mention may be made of at least one selected from the group consisting of benzene, xylene, toluene, mesitylene, pseudocumene, ethylbenzene, propylbenzene, decylbenzene, cyclohexylbenzene, biphenyl, methylbiphenyl, naphthalene, methylnaphthalene, dimethylnaphthalene, ethylnaphthalene, anthracene, methylanthracene, dimethylanthracene, ethylanthracene, and binaphthyl, and the aromatic hydrocarbon is preferably at least one selected from the group consisting of xylene, toluene, and mesitylene, and more preferably xylene. Note that, the xylene formaldehyde resin is also referred to as a "xylene resin", the toluene formaldehyde resin is also referred to as a "toluene resin", and the mesitylene formaldehyde resin is also referred to as a "mesitylene resin".

From a point of view of improving Tg and the elongation percentage of the cured product, the polyfunctional (meth)acrylate having an aromatic ring, which is used as the component (B2), even more preferably contains at least one selected from the group consisting of a compound represented by the following general formula (B2-1), a compound represented by the following general formula (B2-2), a compound represented by the following general formula (B2-3), and polyfunctional (meth)acrylate having a structure derived from an aromatic hydrocarbon formaldehyde resin, even more preferably contains a compound represented by the following general formula (B2-1):

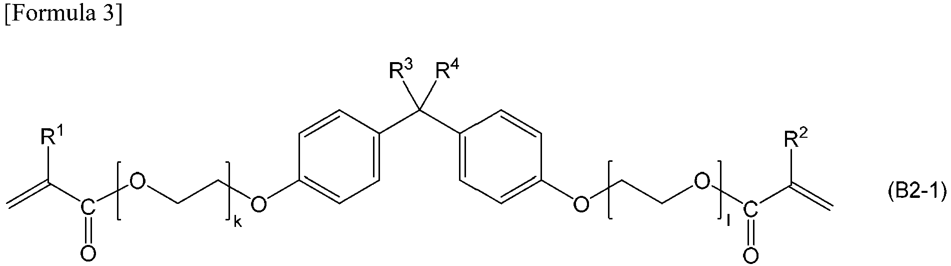

In the formula, R¹ and R² each independently represent a hydrogen atom or a methyl group, and R³ and R⁴ each independently represent a hydrogen atom or a methyl group. k and 1 represent the number of repeating units, and each independently represent the number of from 0 to 20.

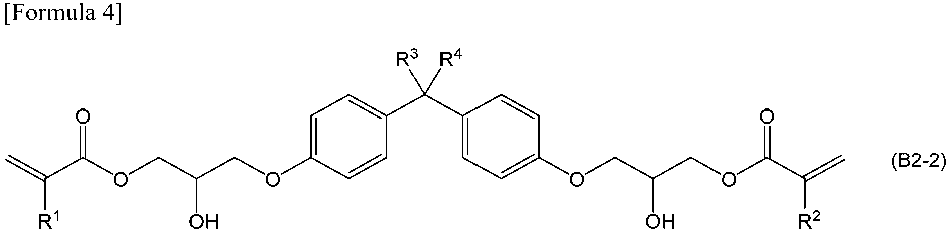

In the formula, R¹ to R⁴ are the same as defined above.

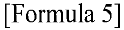

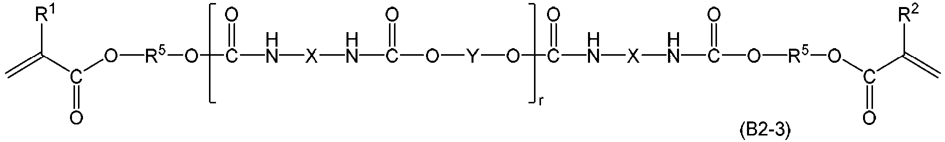

In the formula, R¹ and R² are the same as defined above, and R⁵ is an alkylene group having from 2 to 6 carbons. X is a residue of a diisocyanate and Y is a residue of a diol. Either of X or Y contains an aromatic ring. r represents the number of repeating units, and is a number greater than or equal to 1. (r + 1) units of X and r units of Y may be all the same or different from each other.

In the general formula (B2-1), R¹ and R² each are preferably a methyl group, and R³ and R⁴ each are preferably a methyl group.

From a point of view of improving Tg and the elongation percentage of the cured product, k and l in the general formula (B2-1) are each independently a number of preferably from 1 to 15, more preferably from 1 to 10, and further preferably from 2 to 6. k + l is a number of from 0 to 40 and is a number of preferably from 2 to 30, more preferably from 2 to 20, further preferably from 4 to 20, and even more preferably from 8 to 20 from a point of view of improving Tg and the elongation percentage of the cured product.

Commercially available products such as "BPE-500" and "BPE-900", which are available from Shin-Nakamura Chemical Co., Ltd., can be used as the compound represented by the general formula (B2-1).

In the general formula (B2-2), each of R¹ and R² is preferably a methyl group, and each of R³ and R⁴ is preferably a methyl group.

Specific examples of the compound represented by the general formula (B2-2) include a (meth)acrylic acid adduct of bisphenol A diglycidyl ether [bisphenol A-type epoxy di(meth)acrylate], a (meth)acrylic acid adduct of bisphenol F diglycidyl ether [bisphenol F-type epoxy di(meth)acrylate]. The compound is preferably bisphenol A-type epoxy di(meth)acrylate, and more preferably bisphenol A-type epoxy dimethacrylate.

In the general formula (B2-3), R¹ and R² each are preferably a methyl group. R⁵ is an alkylene group having from 2 to 6 carbons, and the alkylene group may be either linear or branched. R⁵ is an alkylene group preferably having from 2 to 4 carbons, more preferably having from 2 to 3 carbon atoms.

X in the general formula (B2-3) is a divalent group and is a residue of a diisocyanate represented by OCN-X-NCO. Examples of the diisocyanate include: chain aliphatic diisocyanates such as trimethylene diisocyanate, tetramethylene diisocyanate, 1,3-pentamethylene diisocyanate, 1,5-pentamethylene diisocyanate, hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, and 3-methyl-1,5-pentamethylene diisocyanate; aliphatic diisocyanates containing an alicyclic structure, such as 1,3-cyclopentane diisocyanate, 1,4-cyclohexane diisocyanate, 1,3-cyclohexane diisocyanate, methyl-2,4-cyclohexane diisocyanate, methyl-2,6-cyclohexane diisocyanate, 1,2-bis (isocyanatomethyl) cyclohexane, 1,3-bis (isocyanatomethyl) cyclohexane, isophorone diisocyanate, and norbornane diisocyanate; and diisocyanates containing an aromatic ring, such as m-phenylene diisocyanate, p-phenylene diisocyanate, m-xylylene diisocyanate, p-xylylene diisocyanate, 2,4-tolylene diisocyanate, 2,6-tolylene diisocyanate, naphthylene-1,4-diisocyanate, and naphthylene-1,5-diisocyanate. These diisocyanates may be used alone or two or more types thereof may be used in combination.

When Y in the general formula (B2-3) does not include an aromatic ring, the diisocyanate is a diisocyanate including an aromatic ring. When Y in the general formula (B2-3) contains an aromatic ring, from a point of view of improving the elongation percentage of the cured product, the diisocyanate is preferably at least one selected from the group consisting of a chain aliphatic diisocyanate and an aliphatic diisocyanate containing an alicyclic structure, more preferably at least one selected from the group consisting of hexamethylene diisocyanate, 1,2-bis(isocyanatomethyl) cyclohexane, 1,3-bis(isocyanatomethyl) cyclohexane, and isophorone diisocyanate, and further preferably hexamethylene diisocyanate.

Y in the general formula (B2-3) is a divalent group and is a residue of a diol represented by HO-Y-OH. Examples of the diol include: chain aliphatic diols such as ethylene glycol, propylene glycol, 1,3-propanediol, 1,4-butanediol, 1,5-pentanediol, 1,6-hexanediol, 3-methyl-1,5-pentanediol, 2-ethyl-1,3-hexanediol, diethylene glycol, triethylene glycol, polyethylene glycol, polypropylene glycol, and polytetramethylene glycol; diols containing an alicyclic structure, such as cyclohexanedimethanol and tricyclodecane dimethanol; diols containing an aromatic ring, such as biphenol, bisphenol A, bisphenol F, bisphenoxyfluorene ethanol, and diols obtained by adding ethylene oxide, propylene oxide, or caprolactone to these diols. These diols may be used alone or two or more types thereof may be used in combination.

From a point of view of improving Tg and the elongation percentage of the cured product, the diol is preferably at least one selected from the group consisting of chain aliphatic diols and diols containing an aromatic ring, more preferably a diol containing an aromatic ring, and further preferably at least one selected from the group consisting of bisphenol A, bisphenol F, and diols obtained by adding ethylene oxide or propylene oxide thereto.

Y in the general formula (B2-3) is more preferably a divalent group represented by the following general formula (Y1).

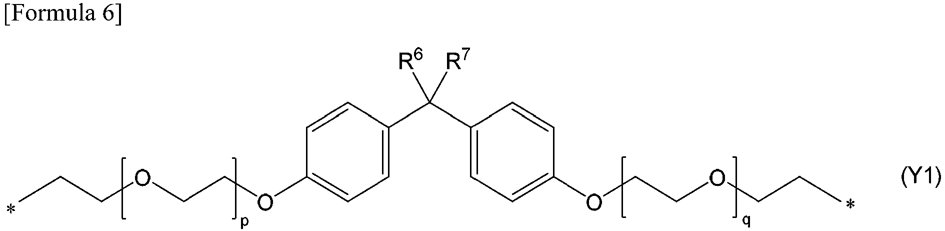

In the formula, R⁶ and R⁷ each independently represent a hydrogen atom or a methyl group, preferably a methyl group. p and q represent the number of repeating units, and each independently represent the number of from 0 to 20. * represents a bonding site.
r in the general formula (B2-3) is a number of 1 or more and is preferably a number of 1 or more and 200 or less.

Alternatively, a commercially available product such as "NIKANOL XUAT" (urethane acrylate xylene resin) available from Fudow Company Limited can be used as polyfunctional (meth)acrylate having a structure derived from an aromatic hydrocarbon formaldehyde resin, which is used as the component (B2).

The content of the component (B2) in the component (B) is preferably from 30 to 99 mass%, more preferably from 40 to 95 mass%, further preferably from 40 to 90 mass%, even more preferably from 40 to 85 mass%, even more preferably from 50 to 85 mass%, even more preferably from 60 to 85 mass%, even more preferably from 70 to 85 mass%, even more preferably from 75 to 85 mass%, and even more preferably from 80 to 85 mass%. When the content of the component (B2) in the component (B) is 30 mass% or more, it is easy to contribute to improvement of Tg of the cured product, and when the content is 99 mass% or less, it is possible to maintain the elongation percentage of the cured product.

The component (B) may contain a monofunctional (meth)acrylate and a polyfunctional (meth)acrylate other than the component (B1) and the component (B2), besides the component (B1) and the component (B2).

However, the total content of the component (B1) and the component (B2) in the component (B) is preferably 70 mass% or more, more preferably 80 mass% or more, further preferably 90 mass% or more, even more preferably 95 mass% or more, and 100 mass% or less from a point of view of improving Tg and the elongation percentage of the cured product.

### <Component (C): Reactive diluent>

The component (C): reactive diluent used in the present invention is a component other than the component (A) and the component (B) and is a compound having at least one reactive functional group and having viscosity of 200 mPa·s or less at 20°C.

The viscosity at 20°C of the component (C) is preferably 150 mPa·s or less, more preferably 130 mPa·s or less, further preferably 120 mPa·s or less, even more preferably 100 mPa·s or less, even more preferably 80 mPa·s or less, even more preferably 60 mPa·s or less, even more preferably 50 mPa·s or less, and even more preferably 30 mPa·s or less from a point of view of low viscosity

Also, the viscosity at 20°C of the component (C) is preferably 2 mPa·s or more, and more preferably 4 mPa·s or more from a point of view of suppressing volatilization.

The viscosity at 20°C of the component (C) can be specifically measured by the method described in Examples using an E-type viscometer.

The component (C) preferably has one or more, and more preferably two or more reactive functional groups from a point of view of improving Tg and the elongation percentage of the cured product. The number of reactive functional groups included in the component (C) is further preferably from 2 to 4, even more preferably 2 or 3, and even more preferably 2 from a point of view of achieving low viscosity and a long pot life and from a point of view of improving Tg and the elongation percentage of the cured product.

The reactive functional group included in the component (C) is preferably a glycidyl group from a point of view of achieving low viscosity and a long pot life and from a point of view of improving Tg and the elongation percentage of the cured product. That is, the component (C) preferably contains a compound having one or more, and more preferably two or more glycidyl groups, and further preferably contains a compound having 2 to 4, even more preferably 2 or 3, and even more preferably two glycidyl groups.

The content of the compound having two or more glycidyl groups in the component (C) is preferably 30 mass% or more, more preferably 50 mass% or more, further preferably 60 mass% or more, even more preferably 70 mass% or more, even more preferably 80 mass% or more, even more preferably 90 mass% or more, even more preferably 95 mass% or more, and 100 mass% or less from a point of view of achieving low viscosity and a long pot life and from a point of view of improving Tg and the elongation percentage of the cured product.

Also, the component (C) is preferably a compound having no cyclic structure from a point of view of low viscosity. The cyclic structure used herein includes an aromatic ring, an alicyclic structure, a heterocyclic structure, and the like.

The functional group equivalent of the component (C) is preferably 90 g/equivalent or more, more preferably 100 g/equivalent or more, and further preferably 110 g/equivalent or more from a point of view of achieving a long pot life and from a point of view of improving Tg of the cured product. Also, the functional group equivalent is preferably 500 g/equivalent or less, more preferably 400 g/equivalent or less, further preferably 300 g/equivalent or less, even more preferably 200 g/equivalent or less, and even more preferably 150 g/equivalent or less from a point of view of low viscosity.

The functional group equivalent of the component (C) means the mass (g) of the component (C) per mol of the reactive functional group, and means an epoxy equivalent when the reactive functional group is a glycidyl group.

Specific examples of the compound having only one glycidyl group as the component (C) include alkyl monoglycidyl ethers such as butyl glycidyl ether and 2-ethylhexyl glycidyl ether; and aromatic ring-containing monoglycidyl ethers such as phenyl glycidyl ether, 2-phenyl phenol glycidyl ether, phenol (EO)₅ glycidyl ether, and p-tert-butyl phenyl glycidyl ether, and one type or two or more types of these can be used. Among them, from a point of view of low viscosity, the compound having only one glycidyl group preferably contains at least one selected from the group consisting of alkyl monoglycidyl ethers, phenyl glycidyl ether, and p-tert-butyl phenyl glycidyl ether, and more preferably contains an alkyl monoglycidyl ether.

Examples of the compound having two or more glycidyl groups as the component (C) include ethylene glycol diglycidyl ether, propylene glycol diglycidyl ether, neopentyl glycol diglycidyl ether, polyethylene glycol diglycidyl ether, polypropylene glycol diglycidyl ether, α,ω-linear alkanediol having 3 or more carbon atoms-diglycidyl ether, glycerol polyglycidyl ether, trimethylolpropane polyglycidyl ether, and diglycerol polyglycidyl ether, and one type or two or more types of these can be used.

The number of polyoxyalkylene units in the polyethylene glycol diglycidyl ether and the polypropylene glycol diglycidyl ether is preferably from 2 to 20, more preferably from 2 to 15, further preferably from 2 to 10, and even more preferably from 2 to 6 from a point of view of low viscosity.

The α,ω-linear alkanediol having 3 or more carbon atoms-diglycidyl ether is preferably α,ω-linear alkanediol having 3 to 12, and more preferably 4 to 8 carbon atoms-diglycidyl ether from a point of view of low viscosity.

Examples of the α,ω-linear alkanediol having 3 or more carbon atoms-diglycidyl ether include 1,3-propanediol diglycidyl ether, 1,4-butanediol diglycidyl ether, 1,6-hexanediol diglycidyl ether, 1,8-octanediol diglycidyl ether, 1,10-decanediol diglycidyl ether, and 1,12-dodecanediol diglycidyl ether.

Among those described above, from a point of view of achieving low viscosity and a long pot life and from a point of view of improving Tg and the elongation percentage of the cured product, the component (C) preferably contains a compound having two or more glycidyl groups, more preferably contains a compound having two or more glycidyl groups and having no cyclic structure, further preferably contains at least one selected from the group consisting of ethylene glycol diglycidyl ether, propylene glycol diglycidyl ether, neopentyl glycol diglycidyl ether, polyethylene glycol diglycidyl ether, polypropylene glycol diglycidyl ether, and α,ω-linear alkanediol having 3 or more carbon atoms-diglycidyl ether, even more preferably contains at least one selected from the group consisting of ethylene glycol diglycidyl ether, propylene glycol diglycidyl ether, neopentyl glycol diglycidyl ether, polyethylene glycol diglycidyl ether having 2 to 6 polyoxyethylene units, polypropylene glycol diglycidyl ether having 2 to 6 polyoxypropylene units, and α,ω-linear alkanediol having 4 to 8 carbon atoms-diglycidyl ether, even more preferably contains one or more selected from the group consisting of ethylene glycol diglycidyl ether, propylene glycol diglycidyl ether, and neopentyl glycol diglycidyl ether, and even more preferably contains at least one selected from the group consisting of ethylene glycol diglycidyl ether and neopentyl glycol diglycidyl ether.

Commercially available products such as DENACOL series "EX-121", "EX-141", "EX-142-IM", "EX-145", "EX-146", "EX-192", "EX-810", "EX-811", "EX-850", "EX-850", "EX-851 ", "EX-821 ", "EX-830", "EX-832", "EX-841", "EX-211 ", "EX-212", "EX-214L", "EX-920", and "EX-931", which are available from Nagase ChemteX Corporation, can be used as the component (C).

### <Component (D): Epoxy resin curing agent>

The component (D) used in the present invention may be a curing agent capable of thermally curing the component (A) through reaction with an epoxy group in the component (A). Examples thereof include an amine-based curing agent, a phenol-based curing agent, an acid anhydride-based curing agent, a hydrazide-based curing agent, and a boron amine complex, and one type or two or more types of these can be used.

From a point of view of improving the pot life of the thermosetting resin composition, the component (D) preferably contains a boron amine complex.

The content of the boron amine complex in the component (D) is preferably 30 mass% or more, more preferably 50 mass% or more, further preferably 70 mass% or more, even more preferably 80 mass% or more, even more preferably 90 mass% or more, and 100 mass% or less from a point of view of improving the pot life of the composition.

Examples of the boron amine complex include a halogenated boron amine complex. Examples of the halogenated boron amine complex include a boron trifluoride amine complex and a boron trichloride amine complex, and from a point of view of improving the pot life of the composition, a boron trichloride amine complex is preferably contained.

Examples of the amine component in the boron amine complex such as a boron trichloride amine complex include alkylamines, alkanolamines, and cycloaliphatic amines.

Examples of the alkylamine include: monoalkylamines such as monoethylamine, monopropylamine, monobutylamine, monohexylamine, monooctylamine, and monolaurylamine; dialkylamines such as dimethylamine, diethylamine, dipropylamine, dibutylamine, dihexylamine, dioctylamine, and dilaurylamine; and trialkylamines such as triethylamine, tripropylamine, tributylamine, trihexylamine, trioctylamine, trilaurylamine, N,N-dimethylethylamine, N,N-dimethylpropylamine, N,N-dimethylbutylamine, N,N-dimethylhexylamine, N,N-dimethyloctylamine, and N,N-dimethyllaurylamine.

Examples of the alkanolamine include monoethanolamine, diethanolamine, triethanolamine, monoisopropanolamine, diisopropanolamine, triisopropanolamine, N-methylethanolamine, N-methylisopropanolamine, N-butylethanolamine, N-methyldiethanolamine, N-butyldiethanolamine, and N-methyldiisopropanolamine.

Examples of the cycloaliphatic amine include piperidine, and N,N-dicyclohexylmethylamine.

Among the above, from a point of view of improving the pot life of the composition, the amine component in the boron amine complex such as boron trichloride amine complex is preferably a trialkylamine, more preferably contains at least one selected from the group consisting of N,N-dimethylethylamine, N,N-dimethylpropylamine, N,N-dimethylbutylamine, N,N-dimethylhexylamine, N,N-dimethyloctylamine, and N,N-dimethyllaurylamine, and even more preferably contains N,N-dimethyloctylamine.

A commercially available product such as "Accelerator DY 9577" (Boron trichloride amine complex, amine component: N,N-dimethyl-n-octylamine) available from HUNTSMAN Corporation can be used as the boron amine complex used as the component (D).

The component (D) can also contain an epoxy resin curing agent other than the boron amine complex. Examples of the epoxy resin curing agent other than the boron amine complex include an amine-based curing agent, a phenol-based curing agent, an acid anhydride-based curing agent, and a hydrazide-based curing agent, and one type or two or more types of these can be used.

However, from a point of view of improving the pot life of the composition, the content of the epoxy resin curing agent, other than the boron amine complex, in the component (D) is preferably 70 mass% or less, more preferably 50 mass% or less, further preferably 30 mass% or less, even more preferably 20 mass% or less, even more preferably 10 mass% or less, even more preferably 5 mass% or less, and the lower limit is 0 mass%.

### <Component (E): Thermal radical polymerization initiator>

The component (E) used in the present invention is required to be any compound capable of generating radicals by heating to polymerize (meth)acryloyloxy groups in the component (B), and examples thereof include azo compounds and organic peroxides.

Examples of the azo compound include azobisisobutyronitrile (AIBN), 2,2'-azobis(2,4-dimethylvaleronitrile) (ABVN), 4,4'-azobis(4-cyanopentanoic acid) (ABCVA), 2,2'-azobis(2-methylbutyronitrile) (AMBN), 2,2'-azobis(2-methylpropionamidine) dihydrochloride (AAPH), dimethyl 2,2'-azobis(2-methylpropionic acid), and 2,2'-azobis[2-(2-imidazoline-2-yl)propane] dihydrochloride, and one type or two or more types of these can be used.

Examples of the organic peroxide include: peroxyketals such as 2,2-bis(4,4-di-tert-butylperoxycyclohexyl)propane, 1,1-di(tert-hexylperoxy)cyclohexane, 1,1-di(tert-butylperoxy)cyclohexane, n-butyl-4,4-di(tert-butylperoxy) valerate, and 2,2-di(tert-butylperoxy)butane; hydroperoxides such as tert-butyl hydroperoxide, cumene hydroperoxide, diisopropylbenzene hydroperoxide, p-menthane hydroperoxide, and 1,1,3,3,-tetramethylbutyl hydroperoxide; dialkyl peroxides such as tert-butyl cumyl peroxide, di-tert-butyl peroxide, di-tert-hexyl peroxide, dicumyl peroxide, α,α'-di(tert-butylperoxy)diisopropylbenzene, tert-butyl cumyl peroxide, 2,5-dimethyl-2,5-di(tert-butylperoxy)hexane, and 2,5-dimethyl -2,5-bis(tert-butylperoxy)hexyne-3; diacyl peroxides such as diisobutyl peroxide, di(3,5,5-trimethylhexanol) peroxide, dilauroyl peroxide, disuccinic acid peroxide, and benzoyl peroxide; peroxydicarbonates such as diisopropyl peroxydicarbonate, di-n-propylperoxydicarbonate, bis(4-tert-butylcyclohexyl) peroxydicarbonate, di-2-ethylhexylperoxydicarbonate, and di-sec-butylperoxydicarbonate; and peroxyesters such as cumyl peroxy neodecanoate, 1,1,3,3,-tetramethylbutyl peroxy neodecanoate, tert-hexyl peroxy neodecanoate, tert-butyl peroxy neodecanoate, tert-hexyl peroxy pivalate, tert-butyl peroxy pivalate, 2,5-dimethyl-2,5-di(2-ethylhexanoylperoxy)hexane, 1,1,3,3,-tetramethylbutylperoxy-2-ethylhexanoate, tert-hexylperoxy-2-ethylhexanoate, tert-butylperoxy-2-ethylhexanoate, tert-butyl peroxylaurate, tert-butyl peroxy-3,5,5-trimethylhexanoate, tert-hexyl peroxyisopropyl monocarbonate, tert-butyl peroxyisopropyl monocarbonate, tert-butylperoxy-2-ethylhexyl monocarbonate, 2,5-dimethyl-2,5-di(benzoylperoxy)hexane, tert-butyl peroxyacetate, tert-hexyl peroxybenzoate, and tert-butyl peroxybenzoate, and one type or two or more types thereof can be used.

Among the above, from a point of view of improving the pot life of the composition, the component (E) is preferably a thermal radical polymerization initiator having a 10-hour half-life temperature of 100°C or higher, and more preferably an organic peroxide having a 10-hour half-life temperature of 100°C or higher.

Examples of the organic peroxide having a 10-hour half-life temperature of 100°C or higher include at least one selected from the group consisting of peroxyketal, hydroperoxide, dialkyl peroxide, and peroxyester.

From a point of view of the curability of the component (B) and from a point of view of improving the pot life of the composition, the component (E) preferably contains dialkyl peroxide, and more preferably contains 2,5-dimethyl-2,5-di(tert-butylperoxy)hexane.

### <Content>

The content of the component (A) in the thermosetting resin composition is preferably from 20 to 80 mass%, more preferably from 30 to 70 mass%, further preferably from 40 to 60 mass%, and even more preferably from 45 to 60 mass% from a point of view of achieving low viscosity and a long pot life and from a point of view of improving Tg and the elongation percentage of the cured product.

The content of the component (B) in the thermosetting resin composition is preferably from 5 to 60 mass%, more preferably from 10 to 50 mass%, further preferably from 20 to 40 mass%, and even more preferably from 25 to 35 mass% from a point of view of achieving low viscosity and a long pot life and from a point of view of improving Tg and the elongation percentage of the cured product.

The content of the component (B) in the thermosetting resin composition is preferably from 10 to 80 parts by mass, more preferably from 20 to 70 parts by mass, further preferably from 30 to 65 parts by mass, even more preferably from 40 to 65 parts by mass, even more preferably from 45 to 65 parts by mass, and even more preferably from 50 to 60 parts by mass, per 100 parts by mass of the component (A). When the content of the component (B) in the thermosetting resin composition is 10 parts by mass or more per 100 parts by mass of the component (A), low viscosity and a long pot life are easily achieved. When the content is 80 parts by mass or less, Tg of the cured product is easily maintained.

The content of the component (C) in the thermosetting resin composition is preferably from 1 to 50 mass%, more preferably from 3 to 40 mass%, further preferably from 5 to 30 mass%, even more preferably from 7 to 25 mass%, and even more preferably from 8 to 20 mass% from a point of view of achieving low viscosity and a long pot life and from a point of view of improving Tg and the elongation percentage of the cured product.

The content of the component (C) in the thermosetting resin composition is preferably from 2 to 45 parts by mass, more preferably from 3 to 40 parts by mass, further preferably from 5 to 30 parts by mass, and even more preferably from 7 to 25 parts by mass, per 100 parts by mass in total of the components (A) to (C). When the content of the component (C) in the thermosetting resin composition is 2 parts by mass or more per 100 parts by mass in total of the components (A) to (C), low viscosity and a long pot life are easily achieved. When the content is 45 parts by mass or less, Tg of the cured product is easily maintained.

The content of the component (D) in thermosetting resin composition is preferably from 0.1 to 40 parts by mass, more preferably from 0.5 to 20 parts by mass, further preferably from 1 to 10 parts by mass, and even more preferably from 3 to 10 parts by mass, per 100 parts by mass of the component (A). When the content of the component (D) in the thermosetting resin composition is 0.1 parts by mass or more per 100 parts by mass of the component (A), curability is easily ensured, and when the content is 40 parts by mass or less, a long pot life is easily achieved.

The content of the component (E) in the thermosetting resin composition is preferably from 0.01 to 5 parts by mass, more preferably from 0.1 to 4 parts by mass, further preferably from 0.5 to 3 parts by mass, and even more preferably from 0.7 to 2 parts by mass, per 100 parts by mass of the component (B). When the content of the component (E) in the thermosetting resin composition is 0.01 parts by mass or more per 100 parts by mass of the component (B), curability is easily ensured, and when the content is 5 parts by mass or less, a long pot life is easily achieved.

The total content of the components (A) to (E) in the thermosetting resin composition is preferably 70 mass% or more, more preferably 80 mass% or more, further preferably 90 mass% or more, even more preferably 95 mass% or more, and 100 mass% or less in the solid content of the thermosetting resin composition from a point of view of effectively exhibiting the effect of the present invention. Note that "solid content of the thermosetting resin composition" is an amount excluding water and organic solvents from total amount of the thermosetting resin composition.

### <Other components>

The thermosetting resin composition may further contain other components such as a filler, a modifying component such as a plasticizer, a flow adjusting component such as a thixotropic agent, a non-reactive diluent, a pigment, a leveling agent, a tackifier, and a stress relaxation component according to the intended use.

Among the above, examples of the stress relaxation component include elastomer particles such as silicone elastomer particles, butyl acrylate elastomer particles, polyether amine elastomer particles, and other rubber particles. In addition, a liquid rubber component such as epoxidized polybutadiene can also be used. Examples of commercially available products of the stress relaxation component include "Kane Ace" B series, FM series, M series, and MX series available from KANEKA CORPORATION, and "EPOLEAD PB3600" and "EPOLEAD PB4700" which are liquid epoxidized polybutadienes available from Daicel Corporation.

When the thermosetting resin composition contains a stress relaxation component, the content thereof is preferably from 0.1 to 15 mass%, more preferably from 0.5 to 10 mass% in the solid content of the thermosetting resin composition.

### <Solvent>

The thermosetting resin composition of the present invention may further contain a solvent from a point of view of enhancing impregnating ability into reinforcing fibers.

Examples of the solvent include alcohol-based solvents such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; ester-based solvents such as ethyl acetate and butyl acetate; ketone-based solvent such as acetone, methylethylketone, and methylisobutylketone; ether-based solvents such as diethyl ether and diisopropyl ether; and hydrocarbon-based solvents such as toluene, and one type or two or more types of these solvents can be used.

When the thermosetting resin composition contains a solvent, the content thereof is not particularly limited, but is preferably 5 mass% or more, more preferably 10 mass% or more, further preferably 15 mass% or more in the thermosetting resin composition from a point of view of enhancing the impregnating ability into the reinforcing fiber, and is preferably 80 mass% or less, more preferably 70 mass% or less from a point of view of the easiness of removing the solvent.

However, the thermosetting resin composition of the present invention is preferably a solvent-free type composition that contains substantially no solvents. The solvent-free type thermosetting resin composition refers to a thermosetting resin composition, in which the content of the solvent in the thermosetting resin composition is preferably less than 5 mass%, more preferably 2 mass% or less, further preferably 1 mass% or less, even more preferably 0.5 mass% or less, and even more preferably 0 mass%.

Alternatively, the thermosetting resin composition of the present invention is preferably a nonaqueous thermosetting resin composition, and a small content of water is preferable. The content of water in the thermosetting resin composition is preferably less than 10 mass%, more preferably less than 5 mass%, further preferably less than 2 mass%, even more preferably less than 1 mass%, even more preferably less than 0.1 mass%, and even more preferably 0 mass%. The content of water used herein is an amount of water intentionally added to the thermosetting resin composition and does not exclude water present in a small amount as impurities.

### <Viscosity>

The thermosetting resin composition of the present invention has low viscosity and, specifically, the viscosity at 25°C of the thermosetting resin composition is preferably 1500 mPa·s or less, more preferably 1000 mPa·s or less, further preferably 900 mPa·s or less, and even more preferably 800 mPa·s or less.

Also, the viscosity at 25°C of the thermosetting resin composition is preferably 50 mPa·s or more, and more preferably 100 mPa·s or more.

The viscosity at 25°C of the thermosetting resin composition can be specifically measured by the method described in Examples using an E-type viscometer.

### <Pot life>

The thermosetting resin composition of the present invention has a long pot life and can achieve, for example, a pot life of 180 days or longer in storage at room temperature (23°C).

The method of preparing the thermosetting resin composition is not particularly limited, and the thermosetting resin composition can be prepared by mixing the components (A) to (E) and other components used as necessary using a known method and apparatus.

### [Cured product]

The cured product of the thermosetting resin composition of the present invention (hereinafter, also simply referred to as "cured product of the present invention") is a thermally cured product of the thermosetting resin composition of the present invention described above by a known method. The curing conditions of the thermosetting resin composition are appropriately selected depending on the intended use and form, but the curing temperature is preferably from 80 to 180°C, and more preferably from 100 to 160°C, and the curing time is preferably from 1 minute to 12 hours, and more preferably from 5 minutes to 6 hours.

The form of the cured product of the present invention is also not particularly limited, and can be selected according to the intended use. For example, when the intended use of the thermosetting resin composition is a coating material, the cured product of the composition is usually in the form of a film. Note that, from a point of view of effectively exhibiting the effect of the present invention, the cured product of the present invention is preferably a matrix resin of a fiber-reinforced composite material described later.

The glass transition temperature (Tg) of the cured product of the present invention is preferably 90°C or higher, more preferably 95°C or higher, further preferably 100°C or higher, and usually 200°C or lower from a point of view of improving the heat resistance of the cured product used for a matrix resin of a fiber-reinforced composite material described later, and the like. Tg of the cured product can be specifically measured by the method described in Examples.

The tensile elongation percentage of the cured product of the present invention is preferably 3.0% or more, more preferably 5.0% or more, and further preferably 7.0% or more from a point of view of improving impact resistance, for example, for use in a matrix resin or the like for a fiber-reinforced composite material described later, and is preferably 20% or less, and more preferably 10% or less from a point of view of obtaining high hardness. The tensile elongation percentage of the cured product can be specifically measured by the methods described in Examples in accordance with JIS K7161-1: 2014 and JIS K7161-2: 2014.

### [Fiber-reinforced composite material]

The fiber-reinforced composite material (hereinafter, also simply referred to as "composite material") of the present invention contains a cured product of the thermosetting resin composition, and a reinforcing fiber. The fiber-reinforced composite material of the present invention contains a cured product of the thermosetting resin composition and thus has high heat resistance and high impact resistance ascribable to a high glass transition temperature and elongation percentage of the cured product.

Examples of the form of the reinforcing fibers used in the composite material include short fibers, long fibers, and continuous fibers. Among them, from a point of view of producing a large structure, long fibers or continuous fibers are preferable, and continuous fibers are more preferable.

Note that, as used herein, the short fibers refer to fibers having a fiber length of 0.1 mm or more and less than 10 mm, and the long fibers refer to fibers having a fiber length of 10 mm or more and 100 mm or less. The continuous fiber refers to a fiber bundle having a fiber length of more than 100 mm.

Examples of the shape of the continuous fibers include a tow, a sheet, and a tape, and examples of the continuous fibers that make up the sheet or the tape include a unidirectional (UD) material, a woven fabric, and a nonwoven fabric.

The number of continuous fiber bundles (the number of filaments) constituting the continuous fibers is preferably from 3 K to 50 K, and more preferably from 6 K to 40 K from a point of view of easiness to obtain a high strength and a high elastic modulus.

In the continuous fibers, the average fiber length of the continuous fiber bundle is not particularly limited, but is preferably from 1 to 10000 m, and more preferably from 100 to 10000 m from a point of view of molding processability.

The average fineness of the continuous fiber bundle is preferably from 50 to 2000 tex (g/1000 m), more preferably from 200 to 1500 tex, and further preferably from 500 to 1500 tex from a point of view of molding processability and from a point of view of easiness to obtain a high strength and a high elastic modulus.

The average tensile modulus of elasticity of the continuous fiber bundle is preferably from 50 to 1000 GPa.

Examples of a material for the reinforcing fibers include inorganic fibers such as carbon fibers, glass fibers, basalt fibers, metal fibers, boron fibers, and ceramic fibers; and organic fibers such as aramid fibers, polyoxymethylene fibers, aromatic polyamide fibers, polyparaphenylenebenzobisoxazole fibers, and ultra-high-molecular-weight polyethylene fibers. Among them, inorganic fibers are preferable from a point of view of obtaining a high strength, and the reinforcing fiber is preferably at least one selected from the group consisting of carbon fibers, glass fibers, and basalt fibers from a point of view of lightweight and high strength, and high elastic modulus, and more preferably carbon fibers from a point of view of strength and lightweight.

Examples of the carbon fibers include polyacrylonitrile-based carbon fibers and pitch-based carbon fibers. In addition, carbon fibers made from plant-based raw materials such as lignin and cellulose can also be used.

The reinforcing fibers may be treated with a treatment agent. Examples of the treatment agent include a surface treatment agent or a sizing agent.

The surface treatment agent is preferably a silane coupling agent. Examples of the silane coupling agent include silane coupling agents each having a vinyl group, silane coupling agents each having an amino group, silane coupling agents each having an epoxy group, silane coupling agents each having a (meth)acrylic group, and silane coupling agents each having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and one type thereof can be used, or two or more types thereof can be used in combination. Examples of combinations of two or more types of the sizing agents include urethane/epoxy-based sizing agents, urethane/acrylic-based sizing agents, and urethane/carboxylic acid-based sizing agents.

The amount of the treatment agent is preferably from 0.001 to 5 mass%, more preferably from 0.1 to 3 mass%, and further preferably from 0.5 to 2 mass% with respect to the reinforcing fibers from a point of view of improving interfacial adhesion between the fibers and the cured product of the thermosetting resin composition and further improving the strength and impact resistance of the resulting fiber-reinforced composite material.

A commercially available product can also be used as the reinforcing fibers. Examples of commercially available continuous carbon fibers (tows) include TORAYCA YARN such as each series of "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", which are available from Toray Industries, Inc.; Tenax such as "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, and "HTS40MC" series, which are available from TEIJIN LIMITED; and carbon fiber tows such as PYROFIL "HT", "IM", "HM" series, GRAFIL "HT" series and "DIALEAD" series, which are available from Mitsubishi Chemical Corporation.

Furthermore, examples of commercially available continuous carbon fibers other than tows include carbon fiber fabrics such as TORAYCA CLOTH "CO6142", "CO6151B", "CO6343", "CO6343B", "CO6347B", "CO6644B", "CK6244C", "CK6273C", "CK6261C", "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series, which are available from Toray Industries, Inc.; and carbon fiber fabrics such as PYROFIL "TR3110M", "TR3523M", "TR3524M", "TR6110HM", "TR6120HM", "TRK101M", "TRK510M", "TR3160TMS", "TRK979PQRW", "TRK976PQRW", "TR6185HM" and "TRK180M", which are available from Mitsubishi Chemical Corporation.

### <Content>

From a point of view of obtaining high strength and high elastic modulus, the content of the reinforcing fibers in the fiber-reinforced composite material is within a range such that the volume fraction of the reinforcing fibers in the fiber-reinforced composite material is preferably 0.10 or more, more preferably 0.20 or more, further preferably 0.30 or more, and even more preferably 0.40 or more. From a point of view of improving impact resistance and molding processability, the content of reinforcing fibers in the fiber-reinforced composite material is within a range such that the volume fraction of reinforcing fibers in the fiber-reinforced composite material is preferably 0.85 or less, more preferably 0.80 or less, and further preferably 0.70 or less.

The volume fraction Vf of the reinforcing fibers in the fiber-reinforced composite material can be calculated from the following equation. 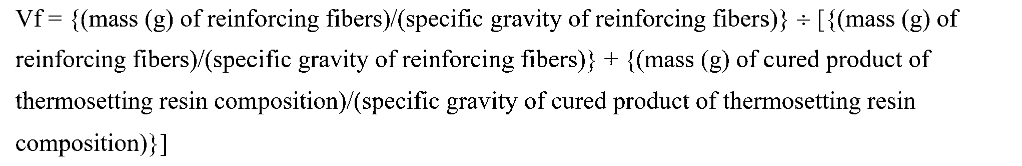 Vf = {(mass (g) of reinforcing fibers)/(specific gravity of reinforcing fibers)} ÷ [{(mass (g) of reinforcing fibers)/(specific gravity of reinforcing fibers)} + {(mass (g) of cured product of thermosetting resin composition)/(specific gravity of cured product of thermosetting resin composition)}]

### <Manufacturing method of a fiber-reinforced composite material>

The method of manufacturing the fiber-reinforced composite material is not particularly limited, and a known method can be appropriately used depending on the form of the reinforcing fibers, the size and shape of the resulting composite material, and the like. Preferably, the composite material can be manufactured using the same method as a manufacturing method of a molded body described later.

### [Molded body]

The present invention can provide a molded body containing the fiber-reinforced composite material. The molded body may be composed, at least partially, of the fiber-reinforced composite material.

The shape or intended use of the molded body is not particularly limited and may be, for example, a large structural material such as an automobile structural material or a building material. Alternatively, the molded body may have a hollow shape as in a pipe, a shaft, a cylinder, a tank, or the like.

### [Manufacturing method of a molded body containing the fiber-reinforced composite material]

The present invention further provides a method of manufacturing a molded body containing the fiber-reinforced composite material (hereinafter, also simply referred to as "method of the present invention"), the method including any of a pultrusion process, a Va-RTM process, and a filament winding molding process.

The thermosetting resin composition of the present invention for use in the manufacturing of the fiber-reinforced composite material has low viscosity and a long pot life and as such, is suitable for the manufacturing method including a pultrusion process, a Va-RTM process, or a filament winding molding process.

The method of the present invention more specifically includes at least the steps of: impregnating reinforcing fibers with the thermosetting resin composition (impregnation step); and curing the reinforcing fibers impregnated with the thermosetting resin composition by heating (heating step).

The manufacturing of the composite and the molded body by the pultrusion process can be performed by, for example, the following procedures.

First, reinforcing fibers unwound from a roll are immersed into a resin bath filled with the thermosetting resin composition described above, thereby impregnating the reinforcing fibers with the composition, and then the reinforcing fibers are pulled up from the resin bath. Note that the impregnation of the reinforcing fibers with the thermosetting resin composition can also be performed under a pressurized condition or a depressurized condition as necessary.

Thereafter, a step of removing excess thermosetting resin composition by using a drawing roll or the like, a drying step for removing a solvent, and a defoaming step may be performed as necessary.

The drying conditions in the drying step are not particularly limited, but are preferably conditions under which the solvent can be removed and the curing of the thermosetting resin composition does not excessively proceed. From this viewpoint, for example, the drying temperature can be selected in the range of from 30 to 120°C, and the drying time can be selected in the range of from 10 seconds to 5 minutes.

Subsequently, the reinforcing fibers impregnated with the thermosetting resin composition are introduced into a mold, cured by heating, and further molded by pulling with a pulling apparatus. The conditions of curing by heating are appropriately selected, but the curing temperature is preferably from 80 to 180°C, and more preferably from 100 to 160°C, and the curing time is preferably from 1 minute to 12 hours, and more preferably from 5 minutes to 6 hours.

The manufacturing of the composite and the molded body by the Va-RTM process can be performed by, for example, the following procedures. First, reinforcing fibers are placed in a pair of upper and lower molds, which are then hermetically sealed, and the internal pressure of the molds is reduced. Subsequently, the thermosetting resin composition prepared separately is injected into the molds and impregnated into the reinforcing fibers, which are then cured by heating and thereby molded. The conditions of curing by heating are the same as described above.

The manufacturing of the composite and the molded body by the filament winding molding process using a tow as reinforcing fibers can be performed by, for example, the following procedures.

First, the reinforcing fiber tow unwound from a roll is immersed into a resin bath filled with the thermosetting resin composition described above, thereby impregnating the tow with the composition, and then the tow is pulled up from the resin bath. Note that the impregnation of the reinforcing fibers with the thermosetting resin composition can also be performed under a pressurized condition or a depressurized condition as necessary.

Thereafter, the above-described step of removing excess thermosetting resin composition, drying step, and defoaming step may be performed as necessary.

Subsequently, the reinforcing fiber tow impregnated with the thermosetting resin composition is wound around an outer surface of a balloon, a mandrel, or a liner, and then cured by heating, and thereby molded. The conditions of curing by heating are the same as described above.

### Examples

Hereinafter, the present invention will be described in detail with reference to Examples and Comparative Examples, but the present invention is not limited to the following Examples. Note that the measurements and evaluations in the present Examples were performed by the methods set forth below.

### <Viscosity>

The viscosity (20°C) of the component (C) used in each example and the viscosity (25°C) of the thermosetting resin composition prepared in each example were measured with an E-type viscometer "TVE-22H type viscometer (cone plate type)" (available from Toki Sangyo Co., Ltd) at their respective predetermined temperatures.

### <Glass transition temperature (Tg)>

The thermosetting resin composition prepared in each example was formed into a flat plate of 200 mm × 200 mm × 2 mm thickness, and thermally cured in a hot air oven at 130°C for 180 minutes to prepare a cured product. A strip piece having a size of 50 mm × 10 mm × 2 mm thickness was cut out from the cured product to give a dynamic viscoelasticity (DMA) measurement sample.

Using the sample, DMA bending measurement was performed under the following conditions using a rotational rheometer "ARES G2" (available from TA Instruments). When tanδ was plotted on the ordinate against a measurement temperature on the abscissa, the peak top value of tanδ was regarded as Tg of the cured product.

### (Measurement conditions)

Measurement mode: Bending DMA measurement
Measurement temperature: 30 to 180°C
Temperature rising rate: 5°C/min

### <Tensile elongation percentage>

The thermosetting resin composition prepared in each example was formed into a flat plate of 200 mm × 200 mm × 2 mm thickness, and thermally cured in a hot air oven at 130°C for 180 minutes to prepare a cured product. A strip piece having a size of 180 mm × 15 mm × 2 mm thickness was cut out from the cured product to give a tensile test piece.

Using the test piece, a tensile test was performed (N = 3) under the following conditions using a precision universal tester ("Autograph AGX-plus" available from Shimadzu Corporation) in accordance with JIS K7161-1:2014 and JIS K7161-2:2014, and the elongation percentage was calculated by the following equations. The length of the test piece at break was calculated from the amount of displacement of the load cell at break.

### (Measurement conditions)

Distance between grips: 115 mm
Gauge length: 75 mm
Load cell (tensile force): 1 kN
Tensile speed: 1 mm/min (tensile direction: longitudinal direction of test piece) 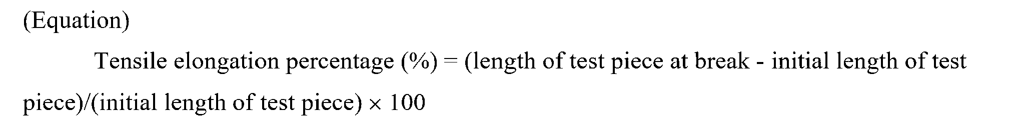
Tensile elongation percentage (%) = (length of test piece at break - initial length of test piece)/(initial length of test piece) × 100 (Equation)

### <Pot life>

The initial viscosity of the thermosetting resin composition at 23°C, prepared in each example, was measured, and then 10 g of the thermosetting resin composition was placed in a plastic cup (46 mm in diameter) and stored at 23°C. The time for the viscosity of the thermosetting resin composition to be twice or more as high as the initial viscosity was measured and shown in the Table 1.

The viscosity of the thermosetting resin composition was measured with an E-type viscometer "TVE-22H type viscometer (cone plate type)" (available from Toki Sangyo Co., Ltd).

### Examples 1 to 8 and Comparative Examples 1 to 4 (Preparation and evaluation of thermosetting resin composition)

The components shown in Table 1 were blended and mixed in parts by mass shown in Table 1 to give a thermosetting resin composition. The resultant thermosetting resin composition was evaluated by the above-described methods. The results are shown in Table 1.

Note that the blending amounts (parts by mass) in Table 1 each are the amount of the active ingredient.

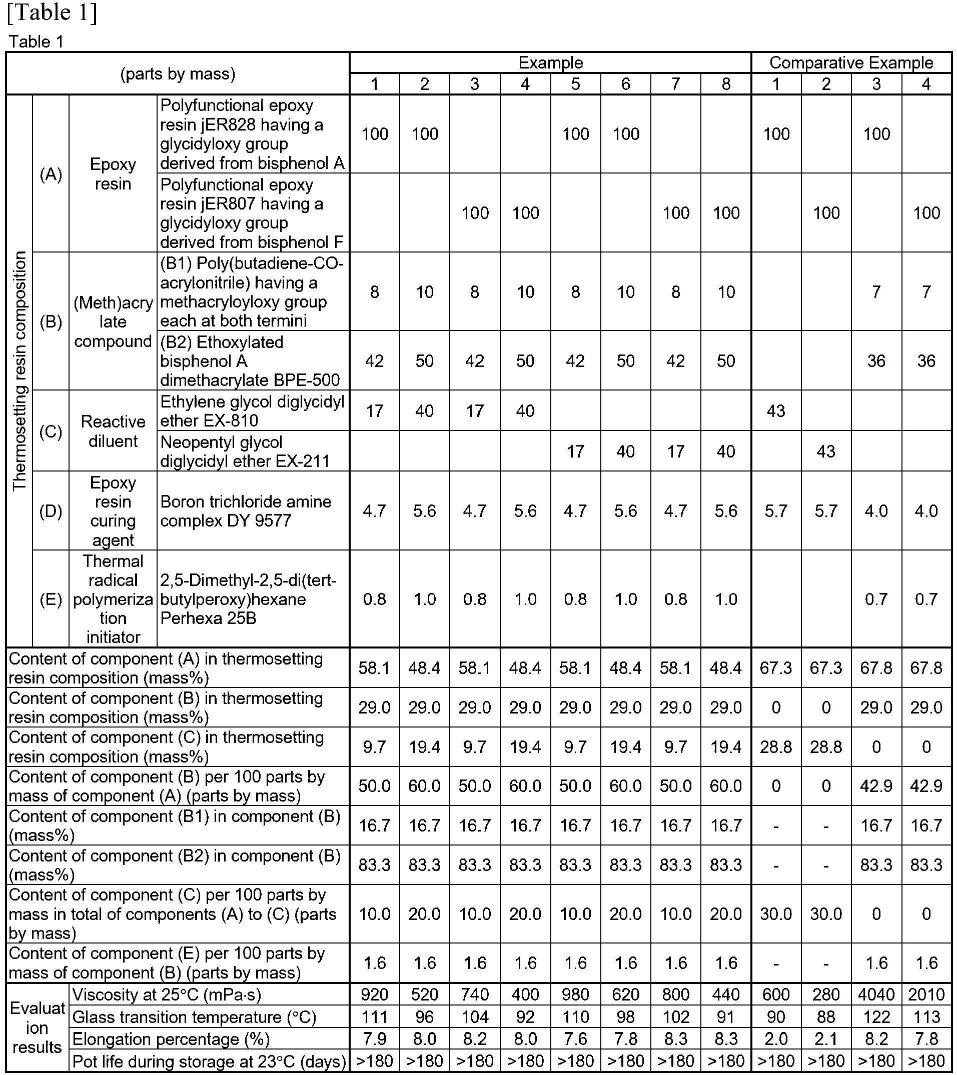

The components listed in Table 1 are as follows.

### < Epoxy resin (A)>

- Polyfunctional epoxy resin having a glycidyloxy group derived from bisphenol A: "jER828" available from Mitsubishi Chemical Corporation, a liquid epoxy resin, epoxy equivalent: 186 g/equivalent, s = 0.11 in the following structural formula 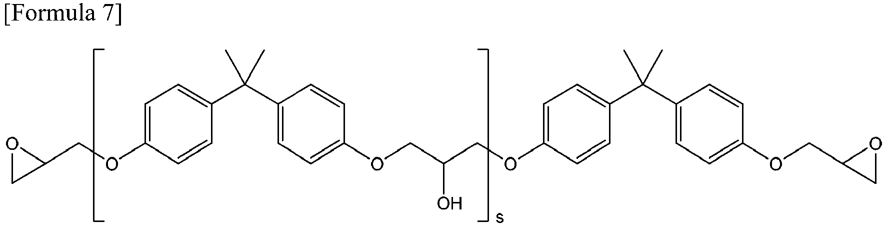
- Polyfunctional epoxy resin having a glycidyloxy group derived from bisphenol F: "jER807" available from Mitsubishi Chemical Corporation, a liquid epoxy resin, epoxy equivalent: 168 g/equivalent, t = 0.09 in the following structural formula

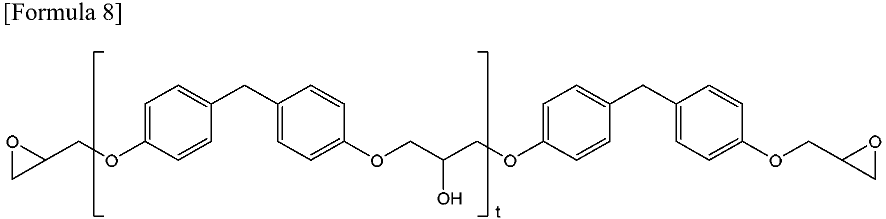

### <(Meth)acrylate compound (B)>

- (B1) Poly(butadiene-CO-acrylonitrile) having a methacryloyloxy group each at both termini: "Hypro 1300X33 LC" available from CHORI GLEX Co., Ltd.
- (B2) Ethoxylated bisphenol A dimethacrylate, k + l = about 10 in the following structural formula, "BPE-500" available from Shin-Nakamura Chemical Co., Ltd.

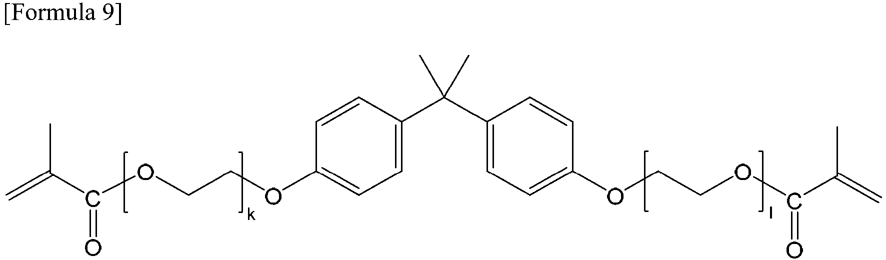

### <Reactive diluent (C)>

- Ethylene glycol diglycidyl ether, "DENACOL EX-810" available from Nagase ChemteX Corporation, epoxy equivalent: 113 g/equivalent, viscosity at 20°C: 20 mPa·s
- Neopentyl glycol diglycidyl ether, "DENACOL EX-211" available from Nagase ChemteX Corporation, epoxy equivalent: 138 g/equivalent, viscosity at 20°C: 20 mPa·s

### <Epoxy resin curing agent (D)>

- Boron trichloride amine complex (amine component: N,N-dimethyl-n-octylamine), "Accelerator DY 9577" available from HUNTSMAN Corporation

### <Thermal radical polymerization initiator (E)>

- 2,5-Dimethyl-2,5-di(tert-butylperoxy)hexane, "Perhexa 25B" available from NOF Corporation, 10-hour half-life temperature: 117.9°C

As seen from Table 1, the thermosetting resin composition of the present invention has viscosity of 1000 mPa·s or less at 25°C and also has a long pot life. It can be seen that its cured products have achieved a glass transition temperature of 90°C or higher and a tensile elongation percentage of 3.0% or more.

In contrast, the cured products of the thermosetting resin compositions of Comparative Examples 1 and 2 which contain neither the component (B) nor the component (E) (component of the thermal radical polymerization system) had a low tensile elongation percentage, and the thermosetting resin compositions of Comparative Examples 3 and 4 which do not contain the component (C) had significantly increased viscosity (initial viscosity) at 25°C.

### Industrial Applicability

The present invention can provide: a thermosetting resin composition which has low viscosity and a long pot life and can provide a cured product having a high glass transition temperature and a high elongation percentage; a cured product thereof; a fiber-reinforced composite material containing the cured product and a reinforcing fiber; and a manufacturing method of a molded body containing the fiber-reinforced composite material.

## Claims

1. A thermosetting resin composition comprising:
component (A): an epoxy resin having no polybutadiene structure;
component (B): a (meth)acrylate compound;
component (C): a reactive diluent;
component (D): an epoxy resin curing agent; and
component (E): a thermal radical polymerization initiator.

2. The thermosetting resin composition according to claim 1, wherein viscosity at 20°C of the component (C) is 200 mPa·s or less.

3. The thermosetting resin composition according to claim 1 or 2, wherein a content of the component (C) in the thermosetting resin composition is from 1 to 50 mass%.

4. The thermosetting resin composition according to any one of claims 1 to 3, wherein the component (B) comprises component (B1): a poly(butadiene-CO-acrylonitrile) having a (meth)acryloyloxy group each at both termini.

5. The thermosetting resin composition according to any one of claims 1 to 4, wherein the component (B) comprises component (B2): a polyfunctional (meth)acrylate having an aromatic ring.

6. The thermosetting resin composition according to any one of claims 1 to 5, wherein the component (C) comprises a compound having two or more glycidyl groups.

7. The thermosetting resin composition according to any one of claims 1 to 6, wherein the component (D) comprises a boron amine complex.

8. The thermosetting resin composition according to claim 7, wherein the amine component in the boron amine complex is a trialkylamine.

9. The thermosetting resin composition according to any one of claims 1 to 8, wherein viscosity at 25°C of the thermosetting resin composition is 1000 mPa·s or less.

10. A cured product of the thermosetting resin composition according to any one of claims 1 to 9.

11. A fiber-reinforced composite material comprising the cured product according to claim 10, and a reinforcing fiber.

12. The fiber-reinforced composite material according to claim 11, wherein the reinforcing fiber is at least one selected from the group consisting of carbon fibers, glass fibers, and basalt fibers.

13. A method of manufacturing a molded body comprising the fiber-reinforced composite material according to claim 11 or 12, the method comprising
any one of a pultrusion process, a Va-RTM process, and a filament winding molding process.
